# EUROPÄISCHE PATENTSCHRIFT

(11) **EP 2 819 067 B1**
(45) Veröffentlichungstag und Bekanntmachung des Hinweises auf die Patenterteilung: **04.10.2017**
(21) Anmeldenummer: 14001732.8
(22) Anmeldetag: 15.05.2014
(51) Int. Cl.: G06K 19/077

(54) **Verfahren zur Herstellung eines tragbaren Datenträgers mit Chip**
Method for producing a portable data carrier with chip
Procédé de fabrication d'un support de données portatif doté d'une puce

(30) Priorität: 28.06.2013 DE 102013010942
(43) Veröffentlichungstag der Anmeldung: 31.12.2014
(73) Patentinhaber: Giesecke+Devrient Mobile Security GmbH, 81677 München (DE)
(72) Erfinder: Tarantino, Thomas, 83410 Laufen (DE)

(56) Entgegenhaltungen:
- WO-A1-2005/122072
- BARRY BERMAN: "3-D printing: The new industrial revolution", BUSINESS HORIZONS, Bd. 55, Nr. 2, 1. März 2012 (2012-03-01), Seiten 155-162, XP055148164, ISSN: 0007-6813, DOI: 10.1016/j.bushor.2011.11.003

## Beschreibung

Die vorliegende Erfindung beschreibt ein Verfahren zur Herstellung eines tragbaren Datenträgers mit Chip, z.B. einer SIM-Karte.

Aus dem Stand der Technik ist die Herstellung von tragbaren Datenträgern bekannt, in die ein Chipmodul eingebaut wird. Ferner ist im Stand der Technik ein dreidimensionales Drucken von Strukturen bekannt.

WO 2005/122072 A1 offenbart ein Verfahren zur Herstellung eines tragbaren Datenträgers mit einem Chip, wobei ein Modulträgerband zur Verfügung gestellt wird, welches mindestens ein Modul trägt, wobei das Modul mindestens ein Kontaktflächenelement und mindestens einen Chip aufweist, wobei jeweils ein Kontakt des Kontaktflächenelements mit jeweils einem Anschluss des Chips elektrisch leitend verbunden wird, wobei ein Datenträgerkörper auf das Modulträgerband aufgebracht wird, so dass der Chip vom Datenträgerkörper umgeben ist und das Kontaktflächenelement sich auf der Oberfläche des Datenträgerkörpers befindet.

Der Aufsatz "3-D printing: The new industrial resolution", von Berry Berman, Business Horizons, Band 55, Nr. 2,1. März 2012, Seiten 155-162, XP055148164, ISSN 0007-6813 untersucht die Unterschiede einer Fertigung mittels 3D-Druck und mittels Spritzgießen.

Nachteilig am Stand der Technik ist, dass insbesondere bei der Herstellung von SIM-Karten die Kartenkörper der SIM-Karten und die in die Kartenkörper einzusetzenden Chipmodule in getrennten Prozessen hergestellt werden. In einem folgenden Prozess werden die Chipmodule in die Kartenkörper der SIM-Karten eingebaut. Im Anschluss an den Einbau der Chipmodule in den Kartenkörper erfolgt die elektrische und optische Personalisierung. Die getrennten Prozessschritte sind somit sehr teuer und benötigen viel Zeit.

Ausgehend von den Nachteilen des Stands der Technik ist es Aufgabe der Erfindung ein kostengünstiges und schnelles Verfahren zur Herstellung von tragbaren Datenträgern, z.B. SIM-Karten zur Verfügung zu stellen.

Die Aufgabe der Erfindung wird durch den unabhängigen Anspruch 1 gelöst. Vorteilhafte Ausführungen sind in den abhängigen Ansprüchen beschrieben.

Ein vorteilhaftes Ausführungsbeispiel der Erfindung ist, dass der Datenträgerkörper mittels eines dreidimensionalen Druckers gedruckt wird.

Ein weiteres vorteilhaftes Ausführungsbeispiel der Erfindung ist, dass das Kontaktflächenelement mindestens einen Kontakt aufweist.

Ein weiteres vorteilhaftes Ausführungsbeispiel der Erfindung ist, dass als Kontaktflächenelement ein ISO-Kontaktflächenelement gemäß ISO 7816 verwendet wird.

Ein weiteres vorteilhaftes Ausführungsbeispiel der Erfindung ist, dass mittels Flip-Chip-Technologie oder mittels Wire-bond-Technologie jeweils ein Kontakt des Kontaktflächenelements mit jeweils einem Anschluss des Chips elektrisch leitend verbunden wird.

Ein weiteres vorteilhaftes Ausführungsbeispiel der Erfindung ist, dass Anzahl, Form und Größe der in das Modulträgerband eingebrachten mindestens einen Aussparung einer Anwendung des Datenträgers entsprechend angepasst werden. Beispielsweise können besonders ausgeformte Aussparungen verwendet werden, um eine besonders haltfähige Verbindung zwischen Modulträgerband und aufgedruckten Datenträgerkörper zu erhalten.

Ein weiteres vorteilhaftes Ausführungsbeispiel der Erfindung ist, dass der tragbare Datenträger während der Herstellung personalisiert wird.

Ein weiteres vorteilhaftes Ausführungsbeispiel der Erfindung ist, dass der Datenträger während der Herstellung optisch personalisiert wird.

Ein weiteres vorteilhaftes Ausführungsbeispiel der Erfindung ist, dass mindestens eine Außenseite des Datenträgers im Modulträgerband bedruckt wird.

Ein weiteres vorteilhaftes Ausführungsbeispiel der Erfindung ist, dass zum Bedrucken ein Digitaldruck oder ein Siebdruck oder Airbrush oder ein Tampondruck verwendet wird.

Ein weiteres vorteilhaftes Ausführungsbeispiel der Erfindung ist, dass der Datenträger mittels Laser oder Tintenstrahldruck oder Inkjet personalisiert wird.

Ein weiteres vorteilhaftes Ausführungsbeispiel der Erfindung ist, dass eine dreidimensionale Kennzeichnung auf mindestens eine Oberfläche des Datenträgerkörpers gedruckt wird.

Ein weiteres vorteilhaftes Ausführungsbeispiel der Erfindung ist, dass sich die Kennzeichnung oberhalb und/ oder unterhalb bezüglich mindestens einer Oberfläche des Datenträgerkörpers befindet.

Ein weiteres vorteilhaftes Ausführungsbeispiel der Erfindung ist, dass die Kennzeichnung aus mindestens einem Buchstaben, einer Zahl oder einem Symbol besteht.

Ein weiteres vorteilhaftes Ausführungsbeispiel der Erfindung ist, dass während des Verfahrens Personalisierungsdaten auf den Chip geschrieben werden.

Ein weiteres vorteilhaftes Ausführungsbeispiel der Erfindung ist, dass der tragbare Datenträger eine SIM-Karte ist.

Ein weiteres vorteilhaftes Ausführungsbeispiel der Erfindung ist, dass der tragbare Datenträger als SIM-Karte in unterschiedlichen Größen und Formen hergestellt wird.

Ein weiteres vorteilhaftes Ausführungsbeispiel der Erfindung ist, dass der tragbare Datenträger als Mini-UICC hergestellt wird.

Ein weiteres vorteilhaftes Ausführungsbeispiel der Erfindung ist, dass der Datenträger aus dem Modulträgerband nach der Herstellung ausgestanzt wird.

Ein weiteres vorteilhaftes Ausführungsbeispiel der Erfindung ist, dass das Verfahren für eine Inline-Produktion geeignet ist.

Neben dem oben beschriebenen Verfahren offenbart die Erfindung zur Lösung der Aufgabe einen tragbaren Datenträger, welcher gemäß dem oben diskutierten Verfahren hergestellt wurde.

Im Folgenden wird die Erfindung anhand der beigefügten Figuren detailliert beschrieben.
Figur 1 zeigt einen Ausschnitt eines Modulträgerbands vor dem Drucken eines Datenträgerkörpers.
Figur 2 zeigt den Ausschnitt des Modulträgerbands nach dem Drucken von zwei Datenträgerkörpern.

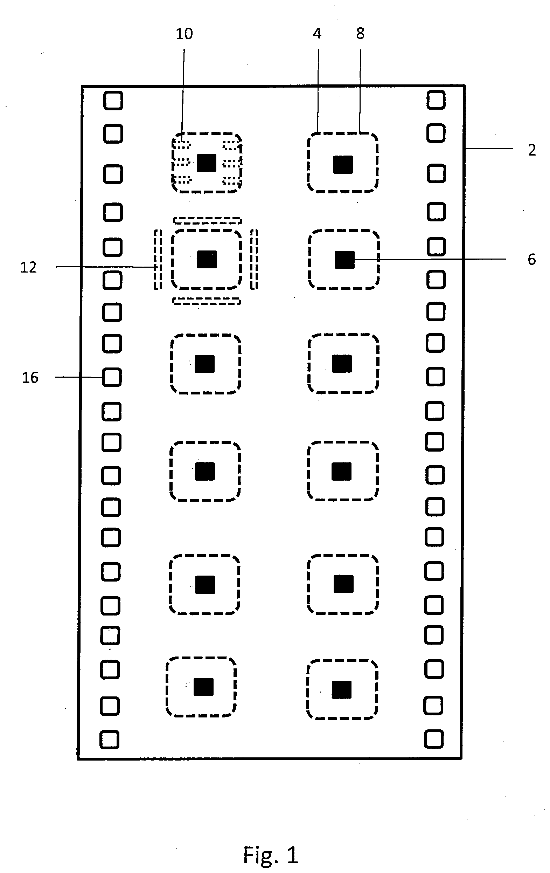

Figur 1 zeigt einen Ausschnitt eines Modulträgerbands 2 vor dem Drucken eines Datenträgerkörpers 14. Zum Weitertransport des Modulträgerbands 2 sind im Modulträgerband 2 Transportlöcher 16 ausgestanzt. Das Modulträgerband 2 weist hier zwei nebeneinander liegende Module 4 auf. Grundsätzlich können ein oder mehrere Module 4 auf dem Modulträgerband 2 nebeneinander angeordnet sein. Jedes Modul 4 weist auf einer Seite einen Chip 6 und auf einer gegenüberliegenden Seite ein Kontaktflächenelement 8, z.B. gemäß ISO-7816 auf. Das Kontaktflächenelement 8 hat hier die gleiche Größe wie das Modul 4, wobei es auch größer oder kleiner als das Modul 4 sein kann. Das Kontaktflächenelement 8 weist beidseitig mindestens einen Kontakt 10 auf, wobei jeweils ein Kontakt 10 auf seiner dem Chip 6 zugewandten Seite mit jeweils einem Anschluss des Chips 6 verbunden wird. Zur Verbindung des mindestens einen Kontakts 10 des Kontaktflächenmoduls 8 mit den Anschlüssen des Chips 6 wird eine Flip-Chip-Technologie oder eine Wire-Bond-Technologie verwendet. Ferner sind beispielhaft im Modulträgerband 2 Ausstanzungen 12 eingebracht. Die Form, Größe und Anzahl der Ausstanzungen 12 können je nach Anwendung angepasst werden auch die Tiefe der Ausstanzung bzw. Ausnehmung kann variieren. Alternativ kann auch auf die Ausstanzungen 12 verzichtet werden. Sinn der Ausstanzungen 12 ist eine möglichst feste mechanische Verbindung zwischen einem aufgedruckten Datenträgerkörper 14 und dem Modul 4 zu erreichen. Der Datenträgerkörper 14 wird mittels eines dreidimensionalen Druckers auf das Modul 4 aufgedruckt. Als dreidimensionale Drucker sind beispielsweise solche Drucker geeignet, wie sie von der Rapid-Prototyping-Technologie bekannt sind.

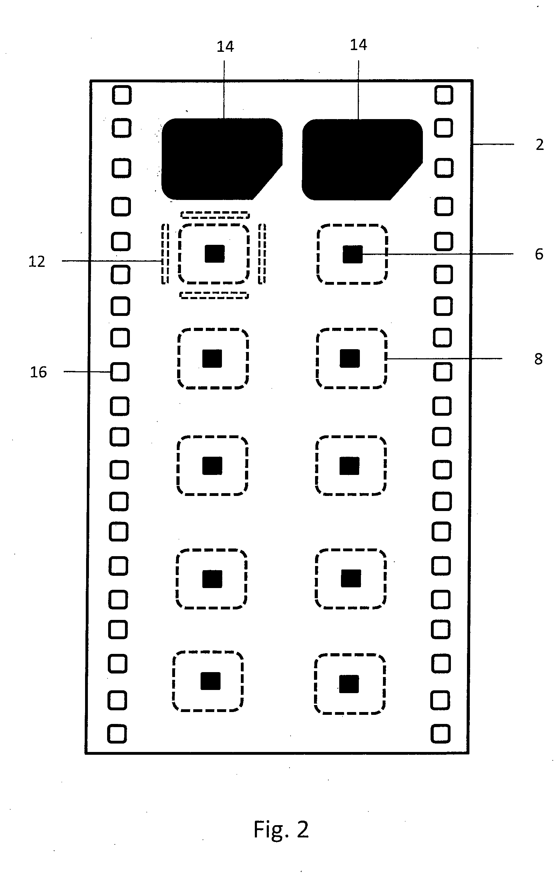

Figur 2 zeigt beispielhaft den Ausschnitt des Modulträgerbands 2 von Figur 1, wobei auf die obersten zwei Module 4 ein Datenträgerkörper 14 aufgedruckt wurde. Der große Vorteil des Druckens eines Datenträgerkörpers 14 ist, dass es sehr schnell geht und vergleichsweise kostengünstig ist im Vergleich zu im Stand der Technik vorgefertigten Datenträgerkörpern 14. Ferner ist der Druck des Datenträgerkörpers 14 sehr flexibel, da ohne großen Aufwand die Abmessungen des Datenträgerkörpers 14 geändert werden können. Es müssen nur die Daten geändert werden, welche die Abmessungen des Datenträgerkörpers 14 bestimmen und von einem dreidimensionalen Drucker verarbeitet werden. Somit können selbst auf einem Modulträgerband 2 unterschiedliche Größen und Formen von Datenträgerkörpern 14 gedruckt werden, z.B. SIM-Karten in der Größe 3FF und 4FF. Außerdem können dreidimensionale Ausnehmungen oder Stufen oder andere Formen im Datenträgerkörper 14 integriert werden. Neben dem Drucken des Datenträgerkörpers 14 kann beispielsweise auch eine dreidimensionale Beschriftung auf den Datenträgerkörper 14 gedruckt werden. Die Beschriftung kann z.B. aus Buchstaben, Zahlen, Symbolen, Zeichen, Bildern etc. bestehen. Das Besondere ist, dass die Beschriftung in einer dreidimensionalen Form gedruckt werden kann. Das bedeutet, dass die Beschriftung auf die Oberfläche des Datenträgerkörpers 14 gedruckt werden kann, so dass die Beschriftung über der Oberfläche des Datenträgerkörpers 14 liegt, was vergleichbar ist mit einer hochgeprägten Beschriftung, wie sie z.B. von Kreditkarten bekannt ist. Alternativ zur Beschriftung über der Oberfläche des Datenträgerkörpers 14 kann die Beschriftung auch so gedruckt werden, dass sie unterhalb einer Oberfläche des Datenträgerkörpers 14 liegt. Dies ist vergleichbar mit einer tiefgeprägten Beschriftung auf einem Datenträger, wie z.B. bei einer Kreditkarte.

Neben dem Aufdrucken einer dreidimensionalen Beschriftung ist es ferner möglich mittels z.B. Digitaldruck, Siebdruck, Tampondruck, Tintenstrahldruck, Inkjet etc. z.B. eine Beschriftung oder Symbole auf den Datenträgerkörper 14 aufzudrucken, insbesondere eine farbige Beschriftung aufzubringen.

Zusätzlich zur äußeren Beschriftung, welche beispielsweise eine optische Personalisierung sein kann, ist es möglich, dass der Chip personalisiert wird, d.h. dass entsprechende Daten während des Herstellungsverfahrens in den Chip 6 geschrieben und gespeichert werden.

Ein großer Vorteil der Erfindung ist, dass sich die Erfindung für sogenannte In-Line-Produktionsverfahren eignet.

Nach dem Aufdrucken des Datenträgerkörpers 14 und dem Aufbringen einer Beschriftung auf den Datenträgerkörper 14 und einem Speichern von Daten im Chip 6, z.B. Personalisierungsdaten, werden die einzelnen Datenträgerkörper 14 mit den mit ihnen verbundenen Modulen 4 jeweils als ein Datenträger aus dem Modulträgerband 2 ausgestanzt und ihrer Verwendung z.B. als SIM-Karte zugeführt.

### Bezugszeichenliste

- 2: Modulträgerband
- 4: Modul
- 6: Chip
- 8: Kontaktflächenelement
- 10: Kontakt eines Kontaktflächenelements
- 12: Aussparung
- 14: gedruckter Datenträgerkörper
- 16: ausgestanzte Transportlöcher

## Patentansprüche

1. Verfahren zur Herstellung eines tragbaren Datenträgers mit einem Chip (6), **gekennzeichnet durch** die Schritte, dass
- ein Modulträgerband (2) zur Verfügung gestellt wird, welches mindestens ein Modul (4) trägt, wobei das Modul (4) mindestens ein Kontaktflächenelement (8) und mindestens einen Chip (6) aufweist,
- jeweils ein Kontakt (10) des Kontaktflächenelements (8) mit jeweils einem Anschluss des Chips (6) elektrisch leitend verbunden wird,
- ein Datenträgerkörper (14) auf das Modulträgerband (2) aufgedruckt wird, so dass der Chip (6) vom Datenträgerkörper (14) umgeben ist und das Kontaktflächenelement (8) sich auf der Oberfläche des Datenträgerkörpers (14) befindet,
- wobei in das Modulträgerband (2) mindestens eine Aussparung (12) eingebracht wird, um eine Haftfähigkeit des aufgedruckten Datenträgerkörpers (14) mit dem Modulträgerband (2) zu verbessern, wobei die Aussparung (12) das Modulträgerband (2) vollständig durchdringt oder eine Vertiefung im Modulträgerband (2) bildet.

2. Verfahren nach Anspruch 1, **dadurch gekennzeichnet, dass** der Datenträgerkörper (14) mittels eines dreidimensionalen Druckers gedruckt wird.

3. Verfahren nach Anspruch 1 oder 2, **dadurch gekennzeichnet, dass** das Kontaktflächenelement (8) mindestens einen Kontakt (10) aufweist.

4. Verfahren nach Anspruch 3, **dadurch gekennzeichnet, dass** als Kontaktflächenelement (8) ein ISO-Kontaktflächenelement gemäß ISO 7816 verwendet wird.

5. Verfahren nach einem der Ansprüche 1 bis 4, **dadurch gekennzeichnet, dass** mittels Flip-Chip-Technologie oder mittels Wire-bond-Technologie jeweils ein Kontakt (10) des Kontaktflächenelements (8) mit jeweils einem Anschluss des Chips (6) elektrisch leitend verbunden wird.

6. Verfahren nach einem der Ansprüche 1 bis 5, **dadurch gekennzeichnet, dass** der tragbare Datenträger während der Herstellung personalisiert wird.

7. Verfahren nach einem der Ansprüche 1 bis 6, **dadurch gekennzeichnet, dass** eine dreidimensionale Kennzeichnung auf mindestens eine Oberfläche des Datenträgerkörpers (14) gedruckt wird.

8. Verfahren nach einem der Ansprüche 1 bis 7, **dadurch gekennzeichnet, dass** während des Verfahrens Personalisierungsdaten auf den Chip (6) geschrieben werden.

9. Verfahren nach einem der Ansprüche 1 bis 8, **dadurch gekennzeichnet, dass** der tragbare Datenträger eine SIM-Karte ist.

10. Verfahren nach einem der Ansprüche 1 bis 9, **dadurch gekennzeichnet, dass** der Datenträger aus dem Modulträgerband (2) nach der Herstellung ausgestanzt wird.

11. Verfahren nach einem der Ansprüche 1 bis 10, **dadurch gekennzeichnet, dass** das Verfahren für eine Inline-Produktion geeignet ist.

12. Tragbarer Datenträger, welcher gemäß dem Verfahren nach den Ansprüchen 1 bis 11 hergestellt wurde.

## Claims

1. A method for producing a portable data carrier with a chip (6), **characterized by** the steps that:
- a module carrier band (2) is made available which carries at least one module (4), wherein the module (4) has at least one contact area element (8) and at least one chip (6),
- one contact (10) of the contact area element (8) in each case is connected electroconductively to respectively one connector of the chip (6),
- a data carrier body (14) is printed onto the module carrier band (2), so that the chip (6) is surrounded by the data carrier body (14) and the contact area element (8) is disposed on the surface of the data carrier body (14),
- wherein into the module carrier band (2) at least one gap (12) is introduced in order to improve an adhesive power of the printed data carrier body (14) to the module carrier band (2), wherein the gap (12) penetrates the module carrier band (2) completely or forms a depression in the module carrier band (2).

2. The method according to claim 1, **characterized in that** the data carrier body (14) is printed by means of a three-dimensional printer.

3. The method according to claim 1 or 2, **characterized in that** the contact area element (8) has at least one contact (10).

4. The method according to claim 3, **characterized in that** as the contact area element (8) an ISO contact area element in accordance with ISO 7816 is employed.

5. The method according to any of the claims 1 to 4, **characterized in that** by means of flip chip technology or by means of wire bond technology one contact (10) of the contact area element (8) in each case is connected electroconductively to respectively one connector of the chip (6).

6. The method according to any of the claims 1 to 5, **characterized in that** the portable data carrier is personalized during the manufacture.

7. The method according to any of the claims 1 to 6, **characterized in that** a three-dimensional marking is printed onto at least one surface of the data carrier body (14).

8. The method according to any of the claims 1 to 7, **characterized in that** personalization data are written onto the chip (6) during the method.

9. The method according to any of the claims 1 to 8, **characterized in that** the portable data carrier is a SIM card.

10. The method according to any of the claims 1 to 9, **characterized in that** the data carrier is punched out from the module carrier band (2) after the manufacture.

11. The method according to any of the claims 1 to 10, **characterized in that** the method is suitable for inline production.

12. A portable data carrier manufactured in accordance with the method according to the claims 1 to 11.

## Revendications

1. Procédé de fabrication d'un support de données portable ayant une puce (6), **caractérisé par** les étapes que :
- une bande support de modules (2) est mise à disposition, laquelle porte au moins un module (4), cependant que le module (4) comporte au moins un élément de surface de contact (8) et au moins une puce (6),
- respectivement un contact (10) de l'élément de surface de contact (8) est relié de manière électroconductrice à respectivement une borne de la puce (6),
- un corps de support de données (14) est imprimé sur la bande support de modules (2), de telle sorte que la puce (6) est entourée par le corps de support de données (14) et que l'élément de surface de contact (8) se trouve sur la surface du corps de support de données (14),
- cependant que, dans la bande support de modules (2), au moins un évidement (12) est pratiqué afin d'améliorer une capacité d'adhérence du corps de support de données (14) imprimé avec la bande support de modules (2), cependant que l'évidement (12) transperce entièrement la bande support de modules (2) ou constitue un renfoncement dans la bande support de modules (2).

2. Procédé selon la revendication 1, **caractérisé en ce que** le corps de support de données (14) est imprimé au moyen d'une imprimante tridimensionnelle.

3. Procédé selon la revendication 1 ou 2, **caractérisé en ce que** l'élément de surface de contact (8) comporte au moins un contact (10).

4. Procédé selon la revendication 3, **caractérisé en ce que**, en tant qu'élément de surface de contact (8), c'est un élément de surface de contact ISO conforme à ISO 7816 qui est utilisé.

5. Procédé selon une des revendications de 1 à 4, **caractérisé en ce que**, par technologie flip-chip ou par technologie wire-bonding, respectivement un contact (10) de l'élément de surface de contact (8) est relié de manière électroconductrice à respectivement une borne de la puce (6).

6. Procédé selon une des revendications de 1 à 5, **caractérisé en ce que** le support de données portable est personnalisé durant la fabrication.

7. Procédé selon une des revendications de 1 à 6, **caractérisé en ce qu'**un marquage tridimensionnel est imprimé sur au moins une surface du corps de support de données (14).

8. Procédé selon une des revendications de 1 à 7, **caractérisé en ce que**, pendant le procédé, des données de personnalisation sont écrites sur la puce (6).

9. Procédé selon une des revendications de 1 à 8, **caractérisé en ce que** le support de données est une carte SIM.

10. Procédé selon une des revendications de 1 à 9, **caractérisé en ce que** le support de données est découpé à partir de la bande support de modules (2) après la fabrication.

11. Procédé selon une des revendications de 1 à 10, **caractérisé en ce que** le procédé est approprié à une production Inline.

12. Support de données (1) portable qui a été fabriqué conformément à un procédé selon les revendications de 1 à 11.
